# EUROPEAN PATENT APPLICATION

(11) **EP 4 715 092 A2**
(43) Date of publication of application: **25.03.2026**
(21) Application number: 25192064.1
(22) Date of filing: 28.07.2025
(51) Int. Cl.: C25B 1/23, C25B 9/75, C25B 9/77, C25B 13/05, C25B 13/08, C25B 11/04, C25B 9/23, C25B 13/02

(54) **ELECTROLYSIS DEVICE**

(30) Priority: 19.09.2024 JP 2024161894
(71) Applicant: Kabushiki Kaisha Toshiba, Tokyo 105-0023 (JP)
(72) Inventor: FUJIWARA, Naoya, Minato-ku, Tokyo (JP); KITAGAWA, Ryota, Minato-ku, Tokyo (JP)
(74) Representative: Hoffmann Eitle

(57) **Abstract**

According to an embodiment, an electrolysis device includes a cathode for reducing a reduction target to generate a reduction product, an anode for oxidizing an oxidation target to produce an oxidation product, an electrolyte layer provided between the cathode and the anode, and the electrolyte layer including an electrolyte layer material containing at least one selected from the group consisting of a heat-resistant polymer, a solid acid, a solid acid salt, and a molten salt, and a first ion conductive material, and a control layer that is provided at least one of between the cathode and the electrolyte layer and between the anode and the electrolyte layer, and that includes a porous material and a second ion-conductive material supported in at least a part of pores of the porous material, wherein 0 ≦ A ≦ B is satisfied, where A is an area of the second ion conductive material on a surface of the control layer on the cathode side or / and the anode side, and B is an area of the second ion conductive material on a surface of the control layer on the electrolyte layer side.

## Description

### CROSS-REFERENCE TO RELATED APPLICATION(S)

This application is based upon and claims the benefit of priority from Japanese Patent Application No. 2024-161894, filed September 19, 2024, the entire contents of which are incorporated herein by reference.

### FIELD

Embodiments described herein relate generally to an electrolysis device.

### BACKGROUND

In recent years, there has been a concern about depletion of fossil fuels such as petroleum and coal, and expectations for renewable energy that can be continuously used have been increasing. From the viewpoint of such energy problems and further environmental problems, power-to-chemical technologies have been developed in which carbon dioxide (CO₂) and nitrogen (N₂) are electrochemically reduced using renewable energy such as sunlight to produce chemical energy sources that can be stored.

An electrolysis device that realizes the power-to-chemical technology includes, for example, an anode that oxidizes water (H₂O) to produce oxygen (O₂) and a cathode that reduces (CO₂) to produce a carbon compound such as carbon monoxide (CO), and an electrolyte layer having ion conductivity is disposed between the cathode and the anode. When the material of the electrolyte layer leaches from the electrolyte layer to the electrode, the voltage required for the electrode reaction is reduced, and the selectivity of the target product is improved. On the other hand, when the leaching excessively occurs, an increase in overvoltage and a side reaction become dominant, which hinders the improvement of the electrolysis efficiency. For example, when the electrolysis device is operated in a temperature range of 100°C to 500°C, the tendency is remarkable.

### BREIF DESCRIPTION OF THE DRAWINGS

FIG. 1 is a cross-sectional view showing an example of the configuration of an electrolysis device according to an embodiment.
FIG. 2 is a schematic view of a part of the configuration of the electrolysis device according to the embodiment.
FIG. 3 is a schematic view of a part of the configuration of the electrolysis device according to the embodiment.
FIG. 4 is a cross-sectional view of an electrolyte layer and a control layer, which relates to the function of the control layer.
FIG. 5 is a cross-sectional view showing a modification of the configuration of the electrolysis device according to the embodiment.
FIG. 6 is a schematic view of a part of the configuration of the electrolysis device according to the embodiment.

### DETAILED DESCRIPTION

In general, according to an embodiment, an electrolysis device includes
a cathode for reducing a reduction target to generate a reduction product,
an anode for oxidizing an oxidation target to produce an oxidation product,
an electrolyte layer provided between the cathode and the anode, and the electrolyte layer including an electrolyte layer material containing at least one selected from the group consisting of a heat-resistant polymer, a solid acid, a solid acid salt, and a molten salt, and a first ion conductive material, and
a control layer that is provided at least one of between the cathode and the electrolyte layer and between the anode and the electrolyte layer, and that includes a porous material and a second ion-conductive material supported in at least a part of pores of the porous material, wherein 0 ≦ A ≦ B is satisfied, where A is an area of the second ion conductive material on a surface of the control layer on the cathode side or / and the anode side, and B is an area of the second ion conductive material on a surface of the control layer on the electrolyte layer side.

Hereinafter, embodiments will be described with reference to the drawings. In the following description, components having the same or similar functions are denoted by the same reference numerals throughout the drawings, and redundant description thereof will be omitted. The drawings are schematic views for explaining the embodiments and promoting the understanding thereof, and the shapes, dimensions, ratios, and the like thereof may be different from those of an actual device, but these can be appropriately changed in design in consideration of the following description and known techniques.

In the present specification, the cathode and the anode may be collectively referred to as electrodes. The cathode catalyst and the anode catalyst may be collectively referred to as an electrode catalyst. Further, the feed fluid and the exhaust fluid may be collectively referred to as a fluid.

In the electrolysis device according to the embodiment, the electrolyte containing the ion conductive material leaches into the electrode, and thus an ion conduction path, an electron conduction path, and a movement path of a reactant and a product are simultaneously secured in the electrode, a favorable reaction field is formed, and a main reaction in the electrode, for example, a reduction reaction of carbon dioxide in the cathode, proceeds. If the electrolyte leaches out excessively, a side reaction at the electrode, for example, the production of hydrogen at the cathode, becomes predominant, and the electrolysis efficiency is poor. Therefore, the present embodiment of the invention provides an electrolysis device having excellent electrolytic efficiency by adjusting the amount of electrolyte leaching to an appropriate amount. Hereinafter, the term "leaching" refers to leaching from the electrolyte.

### (First Embodiment)

The electrolysis device according to the embodiment includes a cathode, an anode, an electrolyte layer, and a control layer. The cathode is configured to reduce a reduction target and produce a reduction product. The anode is configured to oxidize an oxidation target and produce an oxidation product. The electrolyte layer includes a first ion conductive material and an electrolyte layer material containing at least one selected from the group consisting of a heat-resistant polymer, a solid acid, a solid acid salt, and a molten salt. The control layer is provided at least one of between the cathode and the electrolyte layer and between the anode and the electrolyte layer, and includes a porous material and a second ion-conductive material supported in at least a part of pores of the porous material, wherein 0 ≦ A ≦ B is satisfied, where A is an area of the second ion conductive material on a surface of the control layer on the cathode side or / and the anode side, and B is an area of the second ion conductive material on a surface of the control layer on the electrolyte layer side.

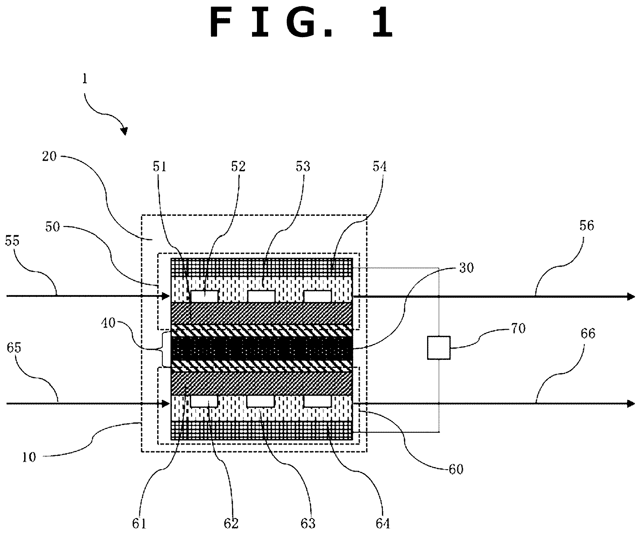

Description will be made with reference to the drawings. FIG. 1 is a schematic cross-sectional view showing an example of the configuration of the electrolysis device according to the embodiment. In the embodiment, the electrolysis device 1 includes an electrolysis unit 10. The electrolysis unit 10 includes an electrolysis cell 20. The electrolysis cell 20 includes an electrolyte layer 30, a control layer 40, a cathode unit 50, and an anode unit 60. The cathode unit 50 includes a cathode 51, a cathode flow path 52, a cathode flow path plate 53, and a cathode collector plate 54. The cathode feed fluid 55 contains a reduction target, and is connected via an inlet, not shown, so as to be supplied to the cathode flow path 52. The cathode exhaust fluid 56, which contains the reduction products, is connected via an outlet, not shown, to be exhausted from the cathode flow path 52. The anode unit 60 includes an anode 61, an anode flow path 62, an anode flow path plate 63, and an anode collector plate 64. The anode feed fluid 65 contains an oxidation target, and is connected via an inlet, not shown, so as to be supplied to the anode flow path 62. The anode exhaust fluid 66, which includes the oxidation products, is connected via an outlet, not shown, to be exhausted from the anode flow path 62. The electrolysis apparatus 1 may further include a power supply 70. The power supply 70 is electrically connected to the cathode collector plate 54 of the cathode unit 50 and the anode collector plate 64 of the anode unit 60.

The electrolyte layer 30, the cathode 51, the anode 61, and the control layer 40 may be stacked to form a membrane electrode assembly. The electrolyte layer 30, the cathode 51, the anode 61, and the control layer 40 may be further laminated together with other members to form the electrolysis cell 20.

Hereinafter, the cathode unit 50, the anode unit 60, the electrolyte layer 30, the control layer 40, and the power supply 70 will be described.

### (Cathode Unit)

The cathode 51 has a first surface which is in contact with the cathode flow path 52 and the cathode flow path plate 53, and a second surface which is opposite to the first surface and is in contact with the control layer 40. The cathode 51 is a reduction electrode for generating a reduction product by performing a reduction reaction of at least one reduction target (substance to be reduced). The reduction target is, for example, carbon dioxide or nitrogen. The reduction product is a compound after the reduction reaction of the reduction target, and is, for example, a carbon compound or a nitrogen compound. The cathode 51 reduces carbon dioxide to produce a carbon compound or reduces nitrogen to produce a nitrogen compound. Examples of carbon compounds includes carbon monoxide, formic acid, methanol, methane, ethanol, ethane, ethylene, formaldehyde, ethylene glycol, acetic acid, propanol. Examples of the nitrogen compound includes ammonia and hydrazine. The cathode 51 can also generate urea or the like by simultaneously reducing carbon dioxide and nitrogen. The cathode 51 may cause a side reaction of generating hydrogen by a reduction reaction of water together with a reduction reaction of carbon dioxide or nitrogen.

The cathode 51 preferably has a shape that allows ions and water to move between the electrolyte layer 30 and the cathode flow path 52. The cathode 51 may be formed in various shapes such as a plate shape, a mesh shape, a wire shape, a punching shape, a particle shape, a porous shape, a thin film shape, and an island shape, or may be formed of a metal fiber sintered body. The material of the cathode 51 may be the material of the cathode catalyst layer described below.

The cathode 51 may include a cathode catalyst layer and a gas diffusion layer, which are not shown. It is desirable that the cathode catalyst layer is disposed on the electrolyte layer 30 side and the gas diffusion layer is disposed on the cathode flow path plate 53 side. The cathode catalyst layer may be embedded in the gas diffusion layer. The cathode 51 may have a porous layer denser than the gas diffusion layer between the gas diffusion layer and the cathode catalyst layer. The cathode 51 having the cathode catalyst layer and / or the gas diffusion layer promotes the supply of the cathode feed fluid 55 to the cathode 51, and can improve the reaction rate of the reduction reaction.

The cathode catalyst layer includes a cathode catalyst that promotes a reduction reaction for reducing a reduction target. The cathode catalyst layer is formed using a material that reduces activation energy for reducing the reduction target. In other words, the cathode catalyst layer is formed using a material that lowers the overvoltage when a reduction product is produced by the reduction reaction of the reduction target. The cathode catalyst layer can be formed using a metal such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), or tin (Sn), or a metal material such as an alloy or an intermetallic compound containing at least one of these metals. The cathode catalyst layer may be formed of a carbon material such as carbon (C), graphene, CNT (carbon nanotube), fullerene, or ketjen black, or a metal complex such as a ruthenium (Ru) complex or a rhenium (Re) complex. The cathode catalyst layer preferably has a shape of a nanoparticle, a nanostructure, a nanowire, or the like in order to enhance the reduction reaction. The nanostructure is a structure in which nanoscale unevenness is formed on the surface of a catalyst material.

The gas diffusion layer diffuses the cathode feed fluid 55 so as to be uniformly supplied from the cathode flow path 52 to the cathode catalyst layer. The gas diffusion layer also plays a role of discharging a product of a reduction reaction generated in the cathode catalyst layer and a role of conducting electrons. The gas diffusion layer is made of, for example, carbon paper or carbon cloth having excellent electron conductivity, and is subjected to a water repellent treatment. The gas diffusion layer having water repellency can suppress the retention of water and maintain the activity of the cathode 51.

In the gas diffusion layer, the cathode feed fluid 55 is supplied from the cathode flow path 52, and the reduction product is discharged. The reduction reaction occurs in the vicinity of the boundary between the gas diffusion layer and the cathode catalyst layer, and the reduction product is discharged from the cathode flow path 52 to the outside of the electrolysis unit 10 via the gas diffusion layer.

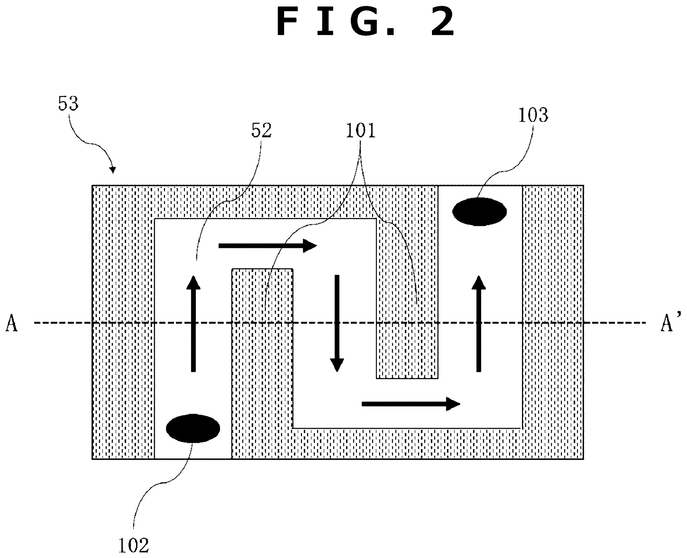

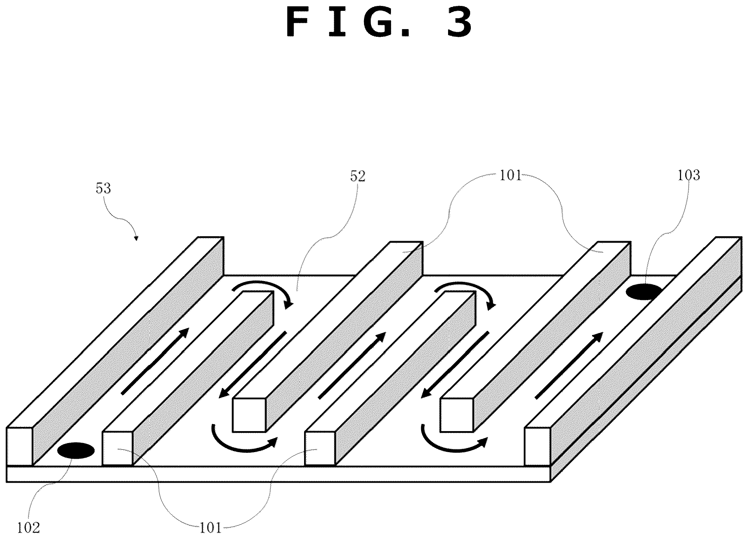

The cathode flow path plate 53 has a first surface in contact with the cathode collector plate 54 and a second surface opposite to the first surface and in contact with the cathode 51. The cathode flow path plate 53 forms a cathode flow path 52 in which a cathode feed fluid 55 is reduced in the cathode 51. FIG. 2 is a view of the cathode flow path plate 53 in the electrolysis device 1 as viewed from the stacking direction. The cathode flow path 52 and the cathode flow path plate 53 of FIG. 1 are shown in a cross section taken along a broken line A-A' of FIG. 2. FIG. 3 is a view of the cathode flow path plate 53 extracted from the electrolysis device, and shows the cathode flow path plate 53 three dimensionally. FIG. 3 shows the cathode flow path plate 53 in an enlarged scale for understanding. Arrows in FIGS. 2 and 3 indicate main movement paths of the fluid when the fluid moves through the cathode flow path 52. The cathode flow path plate 53 has a cathode flow path 52 through which a cathode feed fluid 55 and a cathode exhaust fluid 56 pass, an inlet 102 for supplying the cathode feed fluid 55 to the cathode flow path 52, and an outlet 103 for discharging the cathode exhaust fluid 56 from the cathode flow path 52. The shapes of the cathode flow path 52 and the cathode flow path plate 53 will be described in conjunction with FIG. 1. The cathode flow path 52 is a space (also referred to as a groove or a pit) formed by processing the cathode flow path plate 53. The cathode flow path plate 53 has unevenness in the stacking direction of the electrolysis device 1. In FIG. 2, the cathode flow path 52 is recessed toward the back side of the paper surface. The inlet 102 and the outlet 103 may be connected to other members via pipes or the like.

The cathode flow path 52 is disposed so that the reduction target can react with ions and electrons in the cathode 51. It is desirable to secure a long cathode flow path 52 so that the reduction reaction can be efficiently performed. The cathode flow path plate 53 may be provided with a land 101 as shown in FIG. 2, for example. The land 101 is provided for maintaining mechanical structure and electrical conduction. The lands 101 are preferably staggered to homogenize the fluid flow. Thus, the cathode feed fluid 55 supplied from the inlet 102 passes through the cathode flow path 52 in a meandering manner, and the cathode exhaust fluid 56 is discharged from the outlet 103. The cathode flow path 52 may be disposed so that the reduction target is in contact with the cathode 51, and for example, the cathode 51 may be disposed in the cathode flow path 52. The cathode feed fluid 55 and the cathode exhaust fluid 56 may flow through a portion other than the cathode flow path 52. For example, the fluid may move from one portion of the cathode flow path 52 in contact with the cathode 51 to the cathode 51, and may flow to another portion of the cathode 51 in contact with the cathode flow path 52 via a portion of the cathode 51 in contact with the land 101. In this way, the fluid flow is generated to shortcut the meandering flow path through the porous structure of the cathode 51 in contact with the land 101, and thus the cathode catalyst in the portion of the cathode 51 in contact with the land 101 can be effectively used.

The cathode flow path plate 53 is formed using a material having low chemical reactivity and high conductivity. Examples of such a material include a metal material such as titanium or SUS (stainless steel), and a carbon material. A member such as a packing (not shown) may be interposed between the cathode flow path plate 53 and an adjacent member as necessary.

The cathode feed fluid 55 is a fluid containing a reduction target and is supplied to the cathode flow path 52. The cathode feed fluid 55 passes through the cathode flow path 52 and reacts with water, ions, or electrons in the cathode 51, and thus the composition of the reduction target changes. The cathode feed fluid 55 is preferably present as a gas at the temperature and pressure within the cathode flow path 52. In other words, when the electrolysis device 1 is operated, the temperature and the pressure in the cathode flow path 52 are preferably adjusted so that the cathode feed fluid 55 exists as a gas.

The cathode exhaust fluid 56 is a fluid containing the reduction product and is discharged from the cathode flow path 52. The cathode exhaust fluid 56 contains a reduction product which is a compound after the reaction of the reduction target. That is, a part of the reduction target changes into the reduction product in the cathode flow path 52. The reduction product in the cathode exhaust fluid 56 is separated and recovered as necessary. As a method of separation and recovery, for example, the cathode exhaust fluid 56 may be separated into a gas phase and a liquid phase, and a part of the gas phase may be joined to the cathode feed fluid 55. This method is particularly effective when the cathode exhaust fluid 56 contains an unreacted substance to be reduced, and can increase the conversion rate of the substance to be reduced. The cathode exhaust fluid 56 may be separated into a gas phase and a liquid phase, and a part or all of the liquid phase may be joined to the anode feed fluid 65.

The selectivity of the reduction reaction at the cathode 51 can be changed by acidity and basicity in the vicinity of the reaction site. For example, in order to suppress the generation of hydrogen and to selectively promote the reduction reaction of carbon dioxide, the vicinity of the reaction site is preferably in a basic environment. However, many ion conductors are acidic. Therefore, when the electrolyte layer 30 contains an ion conductor, the cathode from which the component of the electrolyte layer 30 has leached out may also be in an acidic environment, and the reduction reaction of carbon dioxide may be less likely to proceed. In contrast, the cathode 51 may contain a basic compound. Examples of basic compounds include, but are not limited to, alkali metal salts or alkaline earth metal salts. By containing the basic compound in the cathode 51, the acidity can be locally suppressed in the vicinity of the cathode reaction site to increase the basicity, and the reduction reaction of carbon dioxide can be promoted. Examples of a method for containing the basic compound in the cathode 51 include, but are not limited to, a method of mixing the basic compound with a raw material for producing the cathode catalyst layer, and a method of impregnating the cathode catalyst layer with a solution containing the basic compound after the cathode catalyst layer is produced.

### (Anode Unit)

The anode 61 has a first surface in contact with the anode flow path 62 and the anode flow path plate 63, and a second surface opposite to the first surface and in contact with the control layer 40. The anode 61 is an oxidation electrode for performing an oxidation reaction of at least one oxidation target (substance to be oxidized) to produce an oxidation product. The oxidation target is a hydrogen-containing compound. Examples of the hydrogen-containing compound include water, ammonia, and methane. The anode 61 oxidizes, for example, water to generate oxygen and hydrogen ions (protons:H⁺).

The anode 61 is desirably formed in a shape that allows ions and water to move between the electrolyte layer 30 and the anode flow path 62. The anode 61 may be formed in various shapes such as a mesh shape, a wire shape, a punching shape, a particle shape, a porous shape, a thin film shape, and an island shape, or may be formed of a metal fiber sintered body.

As the material of the anode 61, a metal such as titanium (Ti) or iron (Fe), or a metal material such as an alloy (for example, SUS) containing at least one of these metals can be used. The material of the anode 61 may be the material of the anode catalyst layer described later.

The anode 61 may include an anode catalyst layer and a gas diffusion layer, which are not shown. It is desirable that the anode catalyst layer is disposed on the electrolyte layer 30 side and the gas diffusion layer is disposed on the anode flow path plate 63 side. The anode catalyst layer may be embedded in the gas diffusion layer. The anode 61 may have a porous layer denser than the gas diffusion layer between the gas diffusion layer and the anode catalyst layer. The anode 61 having the anode catalyst layer or the gas diffusion layer promotes the supply of the anode feed fluid 65, and can improve the reaction rate of the oxidation reaction.

The anode catalyst layer has an anode catalyst that promotes an oxidation reaction for oxidizing an oxidation target. The anode catalyst layer is formed using a material that reduces the activation energy for oxidizing the oxidation target. In other words, the anode catalyst layer is formed using a material that lowers the overvoltage when an oxidation product is produced by the oxidation reaction of the oxidation target. The anode catalyst layer may be made of a metal such as platinum (Pt), palladium (Pd), iridium (Ir), or nickel (Ni), or a metal material such as an alloy or an intermetallic compound containing at least one of these metals. The anode catalyst layer may be formed of a binary metal oxide such as manganese oxide (Mn-O), iridium oxide (Ir-O), nickel oxide (Ni-O), cobalt oxide (CoO), iron oxide (Fe-O), tin oxide (Sn-O), indium oxide (In-O), ruthenium oxide (Ru-O), lithium oxide (Li-O), or lanthanum oxide (La-O), a ternary metal oxide such as Ni-Co-O, Ni-Fe-O, La-Co-O, Ni-La-O, or Sr-Fe-O, a quaternary metal oxide such as Pb-Ru-Ir-O or La-Sr-Co-O, or a metal complex such as a Ru complex or an Fe complex. The anode catalyst layer preferably has a shape of nanoparticles, a nanostructure, nanowires, or the like in order to enhance the oxidation reaction. When an oxide is used as the anode catalyst layer, the anode catalyst layer is preferably formed by attaching or laminating the oxide to the surface of the substrate made of the above-mentioned metal material.

The gas diffusion layer is the same as the gas diffusion layer in the cathode 51 described above.

The anode flow path plate 63 has a first surface in contact with the anode collector plate 64 and a second surface opposite to the first surface and in contact with the anode 61. The anode flow path plate 63 forms an anode flow path 62 through which an anode feed fluid 65 is oxidized at the anode 61. The anode flow path plate 63 has the same shape and material as the cathode flow path plate 53, and therefore, the cathode flow path 52 and the cathode flow path plate 53 in FIGS. 2 and 3 will be described by replacing them with the anode flow path 62 and the anode flow path plate 63. Further, the description common to the anode flow path plate 63 and the cathode flow path plate 53 will be omitted.

The anode flow path 62 is disposed so that the oxidation target is oxidized in the anode 61. It is desirable to secure a long anode flow path 62 so that the oxidation reaction can be efficiently performed. The anode flow path 62 may be disposed such that the oxidation target is in contact with the anode 61, and for example, the anode 61 may be disposed in the anode flow path 62.

The anode feed fluid 65 is a fluid containing an oxidation target and is supplied to the anode flow path 62. The anode feed fluid 65 reacts with the anode 61 through the anode flow path 62, and thereby the composition of the oxidation target changes. The anode feed fluid 65 is preferably present as a gas at the temperature and pressure within the anode flow path 62. In other words, when the electrolysis device 1 is operated, the temperature and the pressure in the anode flow path 62 are preferably adjusted so that the anode feed fluid 65 exists as a gas.

The anode exhaust fluid 66 is a fluid containing the oxidation product and is discharged from the anode flow path 62. The anode exhaust fluid 66 includes an oxidation product which is a compound after the reaction of the oxidation target. That is, a part of the substance to be oxidized is changed into an oxidation product in the anode flow path 62. The oxidation products in the anode exhaust fluid 66 are separated and recovered as needed. As a method of separation and recovery, for example, the anode exhaust fluid 66 may be separated into a gas and a liquid, and a part or all of the liquid phase may be merged with the anode feed fluid 65. In particular, the anode exhaust fluid 66 is cooled to recover liquid water, and the liquid water is joined to the anode feed fluid 65, whereby the amount of water used can be reduced.

The cathode collector plate 54 is stacked on and electrically connected to the first surface of the cathode flow path plate 53. The anode collector plate 64 is stacked on and electrically connected to the first surface of the anode flow path plate 63. The cathode current collector plate 54 and the anode current collector plate 64 are electrically connected to a power supply 70. The cathode current collector plate 54 and the anode current collector plate 64 are preferably formed using a material having high conductivity.

The electrolysis cell 20 is sandwiched between a pair of support plates (not shown) and is further fastened by bolts or the like. The electrolysis cell 20 may be disposed such that the members to be stacked are horizontal or vertical. When the members to be stacked are horizontal, either the cathode 51 or the anode 61 may be disposed on the upper side.

### (Electrolyte Layer)

The electrolyte layer 30 is present between the cathode 51 and the anode 61 and conducts ions. The electrolyte layer 30 has a first surface in contact with the control layer 40 on the cathode 51 side and a second surface opposite to the first surface and in contact with the control layer 40 on the anode 61 side. The electrolyte layer 30 includes an electrolyte layer material and a first ion conductive material.

The electrolyte layer material is a material contained in the electrolyte layer 30, and the first ion conductive material is an ion conductive material present in the electrolyte layer 30. The electrolyte layer material is at least one of a heat-resistant polymer, a solid acid, a solid acid salt, and a molten salt. The first ion conductive material is any one of a solid acid, a solid acid salt, a molten salt, a liquid acid, an ionic liquid, and an ion conductive polymer. The electrolyte layer material may be an ion-conductive material or a non-ion-conductive material. Therefore, the electrolyte layer material contained in the electrolyte layer 30 may be the same material as the first ion conductive material, or may be different. The electrolyte layer material and the first ion conductive material may be a plurality of the above-mentioned materials or may be one of the above-mentioned materials.

Next, materials that can be contained in the electrolyte layer 30 will be described. The heat-resistant polymer is, for example, in a film form. Hereinafter, the heat-resistant polymer is described as a heat-resistant polymer membrane in a film form. Examples of the polymer constituting the heat-resistant polymer membrane include, but are not limited to, polybenzimidazole (PBI), perfluorosulfonic acid (PFSA), polytetrafluoroethylene (PTFE), ethylene-tetrafluoroethylene copolymer (ETFE), and polyether ketone sulfide. These polymers may or may not have ion conductivity themselves. The heat-resistant polymer membrane may be added with a substance other than the polymer to enhance the function of the heat-resistant polymer membrane. For example, it is possible to impart ion conductivity to a non-ion conductive heat-resistant polymer membrane, to enhance ion conductivity of an ion conductive heat-resistant polymer membrane, or to enhance heat resistance of a heat-resistant polymer membrane. In order to impart or enhance ion conductivity, a liquid acid, a solid acid, or a solid acid salt described below can be added to the heat-resistant polymer membrane. In order to enhance the heat resistance, an oxide such as silicon dioxide, zirconium oxide, or titanium oxide can be added to the heat-resistant polymer membrane. Examples of the method for adding the functional material to the heat-resistant polymer membrane include a method in which a substance to be added or a precursor thereof is mixed with a raw material of the heat-resistant polymer and then the membrane is formed, and a method in which the heat-resistant polymer membrane is formed and then the functional material or the precursor thereof is added by a treatment such as impregnation or drying.

The solid acid and the solid acid salt exist as solids at normal temperature and normal pressure. The solid acid or solid acid salt may undergo a phase change during operation of the electrolysis device, as compared with the state at normal temperature and normal pressure. Examples of the solid acid and the solid acid salt include oxoacid salts, pyrophosphates, and heteropolyacids. The oxoacid salt may be represented by the composition formula MₓH_{y}(AO₄)_{z}. M is lithium (Li), sodium (Na), potassium (K), cesium (Cs), rubidium (Rb), ammonium NH₄, or the like, and M may have a defect. A is an element such as sulfur (S), selenium (Se), arsenic (As), or phosphorus (P). The pyrophosphate is represented by, for example, a composition formula MP₂O₇. M is silicon (Si), zirconium (Zr), tin (Sn), titanium (Ti), germanium (Ge), cerium (Ce), tungsten (W), or the like, and M may have a defect. Further, M may be doped with other elements, and examples of the doped element include indium (In), aluminum (Al), antimony (Sb), scandium (Sc), ytterbium (Yb), gallium (Ga), zinc (Zn), magnesium (Mg), manganese (Mn), and the like. Another example of a pyrophosphate salt is represented by the formula A_{0.5}B_{0.5}P₂O ₇. A is a trivalent metal, and corresponds to indium (In), aluminum (Al), antimony (Sb), gallium (Ga), iron (Fe), yttrium (Y), bismuth (Bi), samarium (Sm), or the like. B is a pentavalent metal, and corresponds to antimony (Sb), niobium (Nb), tantalum (Ta), or the like. The heteropolyacid is represented by, for example, a composition formula HₓAM₁₂O₄₀. A is phosphorus (P), silicon (Si), or the like, and M is tungsten (W), molybdenum (Mo), or the like.

The molten salt is an alkali molten salt or a molten carbonate. The alkali molten salt is, for example, sodium hydroxide or potassium hydroxide. The molten carbonate is, for example, lithium carbonate or sodium carbonate. The alkali molten salt and the molten carbonate may be used as a mixture of the respective molten salts.

The liquid acid exists as a liquid at normal temperature and normal pressure. The liquid acid is for example phosphoric acid.

As the ionic liquid and the ion-conductive polymer, an ion-conductive material can be used.

The first ion-conducting material may be mixed with a matrix material. The matrix material is a material used for enhancing the mechanical strength of the electrolyte layer, and the matrix material may or may not have ion conductivity. Examples of matrix materials include, but are not limited to, polymers, oxides such as silicon dioxide and zirconium oxide, pyrophosphates such as silicon pyrophosphate, and the like. The matrix material can be in the form of, for example, a film, a powder, a porous body, or the like.

The above-described example of adding a solid acid, a solid acid salt, a liquid acid, or the like to the heat-resistant polymer membrane can be considered as that the heat-resistant polymer membrane functions as a matrix material for the materials of the solid acid, the solid acid salt, and the liquid acid which are ion conductors. The matrix material contributes to increasing the mechanical strength of the electrolyte layer, but may also provide other functions. For example, it is known that a reaction occurs at the interface between the solid acid salt and the matrix material, and a new ion conductive layer appears, whereby ion conductivity higher than that of the original solid acid salt is obtained.

The heat-resistant polymer membrane, the solid acid, and the solid acid salt typically exhibit high ion conductivity in a temperature range of 100°C to 500°C. Therefore, the electrolysis device 1 using the heat-resistant polymer membrane, the solid acid, and the solid acid salt in the electrolyte layer 30 is preferably used in a temperature range of 100°C to 500°C. The desirable temperature range varies depending on the material, but in the case of a heat-resistant polymer membrane, the temperature range is preferably 120°C to 200°C. In the case of a solid acid and a solid acid salt, the temperature range is preferably 150°C to 350°C. In actual operation, the electrolyte layer 30 can be controlled to a predetermined temperature by heating or cooling the electrolysis unit 10 of the electrolysis device 1. For temperature control, the electrolysis unit 10 is preferably provided with a heater, an electric furnace, a thermostatic bath, a heat exchanger, and the like.

In addition, by operating the electrolysis device 1 in a temperature range of 100°C to 500°C, there is an effect that various products can be produced at a high reaction rate. Generally, the higher the operating temperature, the higher the reactivity of the reduction target, but on the other hand, at a high operating temperature exceeding 500°C, the formation of reduction products such as oxygen-containing compounds such as alcohols, aldehydes, and carboxylic acids, hydrocarbons having a carbon number of 2 or more, and ammonia becomes thermodynamically difficult. The temperature range of 100°C to 500°C is suitable for obtaining various reduction products while increasing the reactivity of the reduction target. It is known that most of the waste heat generated in the industrial field is 300°C or lower, and when the electrolysis device 1 is operated in a temperature range of 100°C to 300°C, it is possible to save energy consumption by using such waste heat. Therefore, among the materials that can be contained in the electrolyte layer 30, a heat-resistant polymer membrane, a solid acid, and a solid acid salt are desirable in that they exhibit characteristic effects in the above-described temperature range. The solid acid or the solid acid salt is further desirable.

A part of the material contained in the electrolyte layer 30 exists as a liquid during the operation of the electrolysis device 1. An example is phosphoric acid impregnated in a heat-resistant polymer membrane. Further, although many of solid acids and solid acid salts maintain a solid state under temperature and pressure conditions under which they operate as an ion conductor, a substance having a low melting point is newly formed at the interface with the matrix material, and this substance may exist as a liquid. For example, when cesium dihydrogen phosphate, which is an ion conductor, is mixed with silicon pyrophosphate, which is a matrix material, cesium pentahydrogen diphosphate may be generated as a component derived from the solid acid at the interface between the cesium dihydrogen phosphate and the silicon pyrophosphate in the electrolyte layer 30. However, since the melting point of cesium pentahydrogen diphosphate is about 150°C, cesium pentahydrogen diphosphate exists as a liquid depending on the operation conditions of the electrolysis device 1**.**

A part of the components present in the electrolyte layer 30 may seep into the cathode 51 or the anode 61 by a driving force such as capillary action, electrophoresis, or convection due to a pressure difference. Further, it is also considered that water vapor in the cathode feed fluid 55 and the anode feed fluid 65 is condensed in the cathode 51 and the anode 61, respectively, to become liquid water, and liquid acid, solid acid, solid acid salt, and the like are dissolved therein. In particular, when the cathode 51 and the anode 61 have a porous structure, the water vapor is easily condensed.

The component that leaches from the electrolyte layer 30 to the electrode often has ion conductivity. Therefore, the phenomenon in which the components of the electrolyte layer 30 leach to the electrode has the effect of increasing the contact area between the electrode catalyst and the ion conductor and increasing the reaction sites that contribute to the catalytic reaction. This can be expected to provide the effects of reducing the voltage required for the electrode reaction and improving the selectivity of the reduction product. On the other hand, when the component excessively leaches into the electrode, the pore structure in the electrode is blocked by the component, or the catalyst surface is covered with the leached component to lose the function as the reaction active site. As a result, problems such as an increase in overvoltage and a decrease in catalytic reaction activity due to inhibition of gas diffusion may occur. These are not preferable because they lead to an increase in the required power of the electrolysis apparatus 1 and a decrease in the selectivity of the reduction product. As described above, there is a preferable range for the degree of the component of the electrolyte layer 30 partially leaching into the electrode, and it is desirable that the degree is appropriately controlled to fall within the preferable range. The preferred range varies depending on the materials and shapes of the electrolyte layer 30 and the electrodes used, the operating conditions of the electrolysis unit 10, and the like.

### (Control Layer)

The control layer 40 is provided between the electrolyte layer 30 and the cathode 51, between the electrolyte layer 30 and the anode 61, or both of them in the electrolysis unit 10. The control layer 40 is desirably at least between the electrolyte layer 30 and the cathode 51 of the electrolysis unit 10. The control layer 40 includes a porous material and a second ion-conductive material. The role of the control layer 40 is to control the amount of components of the electrolyte layer that leach into the cathode 51 or the anode 61. By using an appropriate control layer 40, the extent to which the components of the electrolyte layer 30 leach into the electrode can be adjusted to a preferred range.

The porous material has pores. The diameters of the pores may be distributed in the thickness direction of the porous material. The porous material is, for example, a non-ion-conducting material. As will be described later, the porous material may partially contain an ion conductive material.

The second ion-conductive material is an ion-conductive material present in the control layer 40. The second ion conductive material is any one of a solid acid, a solid acid salt, a molten salt, a liquid acid, an ionic liquid, and an ion conductive polymer. The second ion-conducting material may include one or more of the first ion-conducting materials. The second ion conductive material is supported in at least some of the pores of the porous material from the electrolyte layer 30 toward the electrode. When the second ion conductive material is present in the pores of the porous material, an ion conduction path from the electrolyte layer 30 to the electrode is formed.

The first ion conductive material and the second ion conductive material may be different ion conductive materials. In other words, the second ion conductive material may be an ion conductive material other than the material selected as the first ion conductive material. As an example, a case where the first ion conductive material is a solid acid is considered. By impregnating the porous material of the non-ion conductive material with the liquid acid, the control layer 40 has ion conductivity. At this time, even if the electrolyte does not leach out from the electrolyte layer 30 into the control layer 40, a path through which ions move from the electrolyte layer 30 to the electrode is provided. In this case, the second ion conductive material is a liquid acid and is different from the first ion conductive material.

A part of the porous material may be an ion conductive material. The control layer 40 may not exhibit ion conductivity when the electrolysis device 1 is not operated, but may have ion conductivity and provide a path through which ions move between the electrolyte layer 30 and the electrode while the electrolysis device 1 is operated. The porous material may be all ionically conductive material.

As described above, the control layer 40 may not exhibit ion conductivity when the electrolysis device 1 is not operated. However, during operation of the electrolysis device 1, the control layer 40 needs to have ion conductivity and provide a path for ions to move between the electrolyte layer 30 and the electrode. If the porous material does not contain an ion-conductive material at the stage of manufacturing the electrolysis device 1, the control layer 40 needs to acquire ion conductivity as a result of treatment before operation of the electrolysis device 1 or operation itself. Specifically, the control layer 40 can exhibit ion conductivity by a component containing an ion conductive material leaching from the electrolyte layer 30 into the pores of the porous material of the control layer 40. On the other hand, when the electrolysis device 1 is in operation, the ion conductivity of the control layer 40 may be insufficient or may be nonuniform only by the leaching of the component of the electrolyte layer 30. Therefore, in the stage of producing the electrolysis device 1**,** the control layer 40 may contain an ion conductor.

The porous material can adjust the degree of movement of the components of the electrolyte layer 30 to the electrode by changing the characteristics thereof. Here, the porosity and the diameter of the pores of the porous material will be described.

The porosity of the porous material is desirably 20% or more and 80% or less. This allows an appropriate amount of the second ion-conductive material to be held in the pores. When the porosity is less than 20%, a sufficient ion conduction path to the electrode is not formed. If the porosity is more than 80%, the strength of the porous material is insufficient.

The porosity can be measured from a cross section of the control layer 40**.** Specifically, the control layer 40 is taken out from the electrolysis device 1, and the control layer 40 is washed to remove the material such as the second ion conductive material supported by the porous material. Next, in the surface of the control layer 40 on the electrode side and the surface of the control layer 40 on the electrolyte layer 30 side, the element distribution of a cross section at a position of 10% from each surface toward the opposite surface is measured using scanning electron microscope, energy dispersive X-ray spectrometry (SEM-EDX). Thus, the porous material and the other material are distinguished from each other, and then the ratio of the area of the pores to the area of the porous material is calculated, and the average of the porosities at the two positions is obtained, whereby the porosity of the porous material can be calculated. Alternatively, the porosity can be determined after identifying the chemical composition of the control layer 40 using an X-ray diffraction (XRD) method.

The diameters of the pores of the porous material are less than or equal to the 1mm. The diameters are preferably 0. 1mm or less. This increases the pressure loss when the liquid component moves in the pores, and thus the movement can be suppressed. The lower limit can be adjusted according to the material used and the desired amount of leaching. The diameter of the pore can be calculated by measuring a cross section of the porous material by the same method as the measurement of the porosity of the porous material described above.

The porous material can have hydrophobicity to control the behavior of components of the electrolyte layer 30 to leach into the electrode. As an index of hydrophobicity, the contact angle of water on the porous material is, for example, 45 degrees or more.

The degree of movement of a part of the components of the electrolyte layer 30 to the electrode can also be adjusted by changing the thickness of the control layer 40. The thickness of the control layer 40 is preferably made substantially equal to the thickness of each of the anode 61, the cathode 51, and the electrolyte layer 30 from the viewpoint of the production of the electrolysis cell. The control layer 40 is, for example, 1mm thick or thinner.

The control of the leaching in the control layer 40 will be described. The area of the second ion conductive material on the surface of the control layer 40 on the cathode 51 side and / or the anode 61 side is denoted by A, and the area of the second ion conductive material on the surface of the control layer 40 on the electrolyte layer 30 side is denoted by B. In this case, 0 ≦ A ≦ B. That is, the area of the second ion conductive material on the surface of the control layer 40 on the electrode side is zero or more and is equal to or less than the area of the surface on the electrolyte layer 30 side. When the content is within this range, the control layer 40 can suppress the leaching from the electrolyte layer 30 to the electrode, and an electrolysis device having excellent electrolytic efficiency can be provided. From the viewpoint of electrolytic efficiency, it is desirable that the leaching is present to some extent, and 0 < A < B is desirable. It is more desirable that A is controlled to be about half of B, that is, the amount of the leaching is controlled to be about 50%.

The boundary conditions will be described. The case of 0 = A, that is, the case where the presence of the second ion conductive material cannot be confirmed on the surface on the cathode 51 side or / and the anode 61 side is a case where the porous material has an ion conductive material. When ions move from the electrolyte layer 30 to the electrode side, the ions move through the porous material at least in the vicinity of the interface on the electrode side in the movement path. The case where A = B, that is, the case where the second ion conductive material is present in the same amount on the cathode 51 side or / and the anode 61 side and on the electrolyte layer 30 side is a case where the amount of the ion conductive material moving from the electrolyte layer 30 to the control layer 40 is small. When 0 = A = B, ions move through the porous material at least in the vicinity of the interface on the electrode side and in the vicinity of the interface on the electrolyte layer 30 side.

When the area of the first ion conductive material on the surface of the electrolyte layer 30 on the control layer 40 side is C, B ≤ C is satisfied. From the viewpoint of controlling the leaching, B < C is desirable. The case of B = C, that is, the case where the second ion conductive material on the cathode 51 side or / and the anode 61 side and the first ion conductive material on the surface of the electrolyte layer 30 on the control layer 40 side are present in the same amount is a case where the suppression of the leaching is performed in the control layer 40.

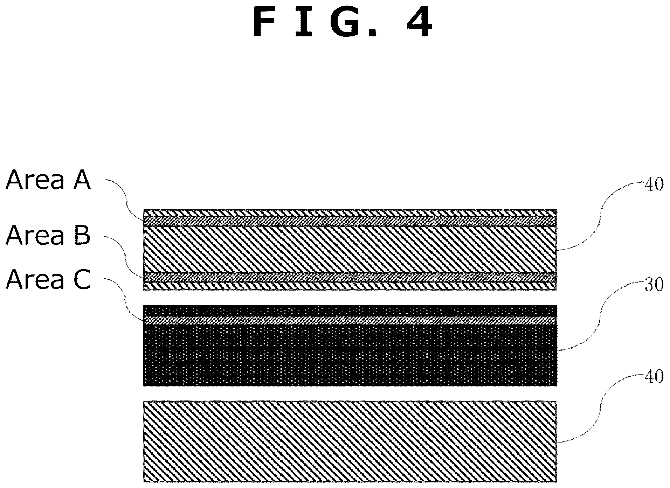

Whether the control layer 40 suppresses the leaching can be determined by whether the relationship between A and B described above is satisfied. This will be described with reference to FIG. 4. FIG. 4 is a cross-sectional view of the electrolyte layer 30 and the control layer 40 extracted from the electrolysis device 1, and the electrolyte layer 30 and the control layer 40 are depicted separately. In FIG. 4, the positions where A, B, and C are measured are described as area A, area B, and area C, respectively. The measurement method will be described. First, the material between the cathode 51 and the anode 61 is taken out from the electrolysis device 1, and the surface in contact with the electrodes is divided into two equal parts. The position of the control layer 40 is specified from the cross section of the taken out material, and in the surface of the control layer 40 on the electrode side and the surface on the electrolyte layer 30 side, the element distribution of each cross section at positions of 5%, 10%, and 15% from each surface toward the opposite surface is measured using EDX, and the average of the three is calculated. This makes it possible to distinguish the porous material from the second ion conductive material and calculate the area of the second ion conductive material. When the element distribution cannot be measured by EDX, XPS is used in combination.

When A = B, the area C of the first ion conductive material of the electrolyte layer 30 is compared with B. First, the element distribution of each of the cross sections at positions of 5%, 10%, and 15% from the surface of the electrolyte layer 30 on the control layer 40 side toward the surface on the opposite side is measured using EDX, and the average of the three is calculated. When the element distribution cannot be measured by EDX, XPS is used in combination.

When the area of the first ion conductive material is compared with the area of the second ion conductive material of B, if the area of the second ion conductive material is smaller, A may be equal to B.

The method for producing the control layer 40 is not limited, but for example, the control layer 40 may be produced as a single member in advance and may be laminated at the time of assembling an electrolysis cell or a cell stack formed by laminating a plurality of electrolysis cells. The control layer 40 may be produced in advance in contact with the surface of the electrolyte layer 30 so as to be integrated with the electrolyte layer 30, and may be laminated at the time of assembling the electrolysis cell 20 or the cell stack. The control layer 40 may be produced in advance in contact with the surface of the electrode so as to be integrated with the electrode, and may be laminated at the time of assembling the electrolysis cell or the cell stack.

### (Power Supply)

The power supply 70 can supply power to the electrolysis unit 10, for example. The power supply 70 is electrically connected to the cathode 51 and the anode 61 via, for example, the cathode flow path plate 53, the anode flow path plate 63, the cathode collector plate 54, and the anode collector plate 64. The power supply 70 can supply electric power to the electrolysis unit 10 to cause an electrolytic reaction such as an oxidation reaction or a reduction reaction. A reduction reaction in the cathode 51 and an oxidation reaction in the anode 61 are performed using electric energy supplied from the power supply 70. The power supply 70 is connected to the cathode collector plate 54 and the anode collector plate 64 by, for example, wiring. Electrical equipment such as an inverter, a converter, and a battery may be installed between the electrolysis unit 10 and the power supply 70 as necessary. The electrolysis unit 10 is driven by, for example, a constant voltage method or a constant current method, but is not limited thereto.

The power supply 70 may be a normal commercial power supply, a battery, or the like, or may be a power supply that converts renewable energy into electric energy and supplies the electric energy. Examples of such power supply include power supply for converting kinetic energy or potential energy such as wind power, water power, geothermal heat, or tidal power into electric energy, power supply such as solar cells having photoelectric conversion elements for converting light energy into electric energy, power supply such as fuel cells or storage batteries for converting chemical energy into electric energy, and power supplies for devices for converting vibrational energy such as sound into electric energy. The photoelectric conversion element has a function of performing charge separation by energy of light such as sunlight with which the photoelectric conversion element is irradiated. Examples of the photoelectric conversion element include a pin junction solar cell, a pn junction solar cell, an amorphous silicon solar cell, a multi-junction solar cell, a single crystal silicon solar cell, a polycrystalline silicon solar cell, a dye-sensitized solar cell, and an organic thin film solar cell. The photoelectric conversion element may be stacked on at least one of the cathode 51 and the anode 61 inside the electrolysis unit 10.

Next, the operation of the electrolysis device 1 shown in FIG. 1 will be described. Here, a case where carbon monoxide (CO) is produced as the carbon compound will be mainly described.

First, a reaction process in the case where hydrogen ions (H⁺) mainly contribute to the reaction will be described. When an electric current is supplied from the power supply 70 between the anode 61 and the cathode 51, an oxidation reaction of water occurs in the anode 61 in contact with the anode feed fluid 65. Specifically, as shown in the following formula (1), H₂O contained in the anode feed fluid 65 is oxidized to produce oxygen (O₂) and hydrogen ions (H⁺) .

2H₂O → 4H⁺ + O₂ + 4e⁻ (1)

H⁺ generated in the anode 61 moves in the electrolyte layer 30 and the control layer 40 and reaches the vicinity of the cathode 51. The reduction reaction of carbon dioxide occurs by the electrons (e⁻) based on the current supplied from the power supply 70 to the cathode 51 and the H⁺ moved to the vicinity of the cathode 51. Specifically, as shown in the following formula (2), CO₂ supplied from the cathode flow path 52 to the cathode 51 is reduced to produce CO. As shown in the following formula (3), hydrogen is generated when a hydrogen ion (H⁺) receives an electron. At this time, hydrogen may be produced simultaneously with carbon monoxide.

2CO₂ + 4H⁺ + 4e⁻ → 2CO + 2H₂O. (2)

2H⁺ + 2e⁻ → H₂ (3)

When methane (CH₄) is produced as the carbon compound, the following reaction proceeds at the cathode.

CO₂ + 8H⁺ + 8e⁻ → CH₄ + 2H₂O. (x)

At this time, methane may be produced simultaneously with carbon monoxide and hydrogen.
Next, the reaction process in the case where hydroxide ions (OH⁻) mainly contribute to the reaction will be described. When a current is supplied from the power supply 70 between the anode 61 and the cathode 51, water and carbon dioxide are reduced in the vicinity of the cathode 51 as shown in the following formula (4), and carbon monoxide and hydroxide ions are generated. Further, as shown in the following formula (5), hydrogen is generated by water receiving electrons. At this time, hydrogen may be produced simultaneously with carbon monoxide. The hydroxide ions generated by these reactions diffuse to the vicinity of the anode 61, and as shown in the following formula (6), the hydroxide ions are oxidized to generate oxygen (O₂).

2CO₂ + 2H₂O + 4e⁻ → 2CO + 4OH⁻ (4)

2H₂O + 2e⁻ → H₂ + 2OH⁻ (5)

4OH⁻ → 2H₂O + O₂ + 4e⁻ (6)

### (Second Embodiment)

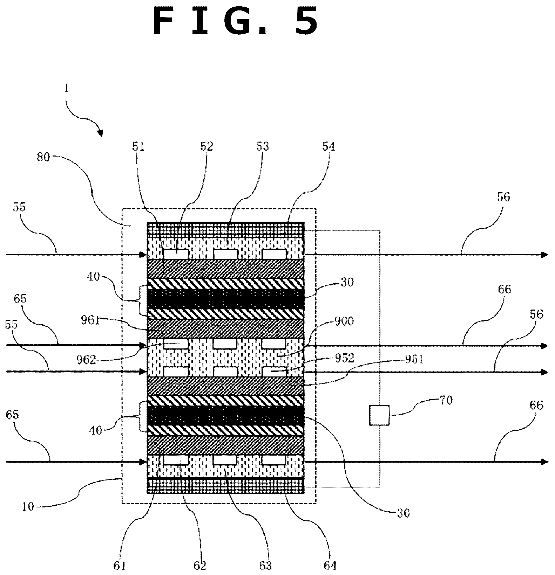

A case where the electrolysis device 1 has a cell stack structure will be described. FIG. 5 is a schematic cross-sectional view showing a modification of the configuration of the electrolysis device according to the embodiment. The cell stack 80 includes a bipolar plate 900, a cathode 951, a cathode flow path 952, an anode 961, and an anode flow path 962 in addition to the electrolysis cell 20 of the first embodiment. When the electrolysis device 1 employs the cell stack, the amount of reaction of the reduction target per floor area required for installation of the electrolysis unit 10 increases, and thus the amount of generation of the reduction product can be increased. The number of the plurality of electrolysis cells to be stacked is preferably, for example, 10 or more and 150 or less.

When the electrolysis unit 10 includes a plurality of electrolysis cells, the cathode feed fluid 55 and the anode feed fluid 65 to be supplied to each electrolysis cell can be supplied from the same number of pipes as the number of electrolysis cells. If the number of pipes is less than the number of electrolysis cells, the pipes can be distributed and supplied.

The cathode exhaust fluid 56 and the anode exhaust fluid 66 discharged from each electrolysis cell can be discharged from the same number of pipes as the number of electrolysis cells. When the number of pipes is smaller than the number of electrolysis cells, the pipes can be merged and discharged. The distribution of the cathode feed fluid 55 and the anode feed fluid 65 and the merging of the cathode exhaust fluid 56 and the anode exhaust fluid 66 may be performed outside the electrolysis unit 10 or may be performed inside the electrolysis unit 10. Here, the inside of the electrolysis unit 10 refers to an area in which a plurality of electrolysis cells are sandwiched between a pair of support plates and further fastened with bolts or the like.

The bipolar plate 900 has a first surface in contact with the anode 961 and a second surface opposite to the first surface and in contact with the cathode 951. The bipolar plate 900 may be electrically connected to the cathode 951 and the anode 961.

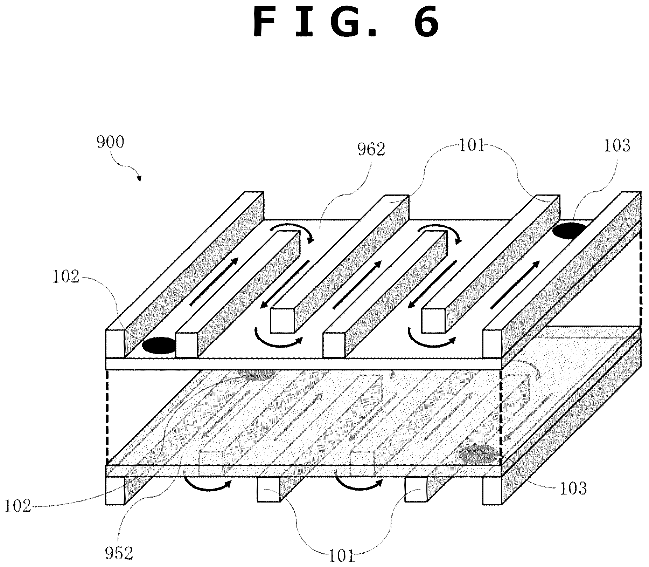

The bipolar plate 900 has a cathode flow path 952 and an anode flow path 962. FIG. 6 is a view of the bipolar plate 900 extracted from the electrolysis device 1, and shows the bipolar plate 900 three dimensionally. The main shape is the same as that of the cathode flow path plate 53 described in FIG. 3. The anode flow path 962 and the cathode flow path 952 are joined together, but are shown separately here for understanding. Arrows in FIG. 6 indicate main movement paths of the fluid when the fluid moves through the anode flow path 962 and the cathode flow path 952.

The bipolar plate 900 is provided between the plurality of membrane electrode assemblies and partitions the plurality of electrolysis cells. The adjacent cathode 951 and anode 961 may be electrically connected via the bipolar plate 900. The cathode flow path 952 of the bipolar plate 900 is provided, for example, on the first surface of the bipolar plate 900 and faces the cathode 951 of one of the plurality of membrane electrode assemblies. The anode flow path 962 of the bipolar plate 900 is provided, for example, on a second surface of the bipolar plate 900 opposite to the first surface, and faces the anode 961 of another one of the plurality of membrane electrode assemblies.

The plurality of electrolysis cells are stacked, sandwiched between a pair of support plates, and further fastened and fixed by bolts or the like. The cell stack may be installed in such a manner that the stacked members are arranged horizontally or vertically. When the stacked members are horizontal, either the cathode or the anode may be disposed on the uppermost surface of the cell stack.

The bipolar plate 900 may be formed of the same material as the cathode flow path plate 53 and the anode flow path plate 63 described above.

The invention of the embodiment will be described below.
<1> An electrolysis device includes
   a cathode for reducing a reduction target to generate a reduction product,
   an anode for oxidizing an oxidation target to produce an oxidation product,
   an electrolyte layer provided between the cathode and the anode, and the electrolyte layer including an electrolyte layer material containing at least one selected from the group consisting of a heat-resistant polymer, a solid acid, a solid acid salt, and a molten salt, and a first ion conductive material, and
   a control layer that is provided at least one of between the cathode and the electrolyte layer and between the anode and the electrolyte layer, and that includes a porous material and a second ion-conductive material supported in at least a part of pores of the porous material, wherein 0 ≦ A ≦ B is satisfied, where A is an area of the second ion conductive material on a surface of the control layer on the cathode side or / and the anode side, and B is an area of the second ion conductive material on a surface of the control layer on the electrolyte layer side.
<2> The electrolysis device according to <1>, wherein
   B ≤ C is satisfied, where C is an area of the first ion conductive material on a surface of the electrolyte layer on the control layer side.
<3> The electrolysis device according to <1> or <2>, wherein
   the first ion conductive material includes at least one of a solid acid, a solid acid salt, a molten salt, a liquid acid, an ionic liquid, and an ion conductive polymer.
<4> The electrolysis device according to any one of <1> to <3>, wherein
   the second ion-conductive material includes one or more of the first ion-conductive materials.
<5> The electrolysis device according to any one of <1> to <3>, wherein
   the first ion conductive material and the second ion conductive material are different from each other.
<6> The electrolysis device according to any one of <1> to <5>, wherein
   the porous material includes a non-ion conductive material.
<7> The electrolysis device according to any one of <1> to <6>, wherein
   a porosity of the porous material is 20% or more and 80% or less.
<8> The electrolysis device according to any one of <1> to <7>, wherein
   the diameters of the pores are equal to or smaller than 1mm.
<9> The electrolysis device according to any one of <1> to <8>, wherein
   the electrolyte layer contains a matrix material.
<10> The electrolysis device according to any one of <1> to <9>, wherein
   a contact angle of water on the porous material is 45 degrees or more.
<11> The electrolysis device according to any one of <1> to <10>, wherein
   a temperature of the electrolyte layer during operation of the electrolysis device is 100°C or higher and 500°C or lower.
<12> The electrolysis device according to any one of <1> to <11>, wherein
   the cathode contains a basic compound.
<13> The electrolysis device according to <12>, wherein
   the basic compound is an alkali metal salt or an alkaline earth metal salt.

## Claims

1. An electrolysis device (1) comprising:
a cathode (51) for reducing a reduction target to generate a reduction product,
an anode (61) for oxidizing an oxidation target to produce an oxidation product,
an electrolyte layer (30) provided between the cathode (51) and the anode (61), and the electrolyte layer (30) including an electrolyte layer material containing at least one selected from the group consisting of a heat-resistant polymer, a solid acid, a solid acid salt, and a molten salt, and a first ion conductive material, and
a control layer (40) that is provided at least one of between the cathode (51) and the electrolyte layer (30) and between the anode (61) and the electrolyte layer (30), and that includes a porous material and a second ion-conductive material supported in at least a part of pores of the porous material, wherein 0 ≦ A ≦ B is satisfied, where A is an area of the second ion conductive material on a surface of the control layer (40) on the cathode (51) side or / and the anode (61) side, and B is an area of the second ion conductive material on a surface of the control layer (40) on the electrolyte layer (30) side.

2. The electrolysis device (1) according to claim 1, wherein
B ≤ C is satisfied, where C is an area of the first ion conductive material on a surface of the electrolyte layer (30) on the control layer (40) side.

3. The electrolysis device (1) according to claim 1 or 2, wherein
the first ion conductive material includes at least one of a solid acid, a solid acid salt, a molten salt, a liquid acid, an ionic liquid, and an ion conductive polymer.

4. The electrolysis device (1) according to any one of claims 1 to 3, wherein
the second ion-conductive material includes one or more of the first ion-conductive materials.

5. The electrolysis device (1) according to any one of claims 1 to 3, wherein
the first ion conductive material and the second ion conductive material are different from each other.

6. The electrolysis device (1) according to any one of claims 1 to 5, wherein
the porous material includes a non-ion conductive material.

7. The electrolysis device (1) according to any one of claims 1 to 6, wherein
a porosity of the porous material is 20% or more and 80% or less.

8. The electrolysis device (1) according to any one of claims 1 to 7, wherein
the diameters of the pores are equal to or smaller than 1mm.

9. The electrolysis device (1) according to any one of claims 1 to 8, wherein
the electrolyte layer (30) contains a matrix material.

10. The electrolysis device (1) according to any one of claims 1 to 9, wherein
a contact angle of water on the porous material is 45 degrees or more.

11. The electrolysis device (1) according to any one of claims 1 to 10, wherein
a temperature of the electrolyte layer (30) during operation of the electrolysis device (1) is 100°C or higher and 500°C or lower.

12. The electrolysis device (1) according to any one of claims 1 to 11, wherein
the cathode (51) contains a basic compound.

13. The electrolysis device (1) according to claim 12, wherein
the basic compound is an alkali metal salt or an alkaline earth metal salt.
